# EUROPEAN PATENT APPLICATION

(11) **EP 3 691 000 A1**
(43) Date of publication of application: **05.08.2020**
(21) Application number: 19155073.0
(22) Date of filing: 01.02.2019
(51) Int. Cl.: H01M 4/587, H01B 1/04, H01M 4/36, H01G 11/00, H01M 4/62

(54) **CARBON LIGNIN ELECTRODE**

(71) Applicant: Ligna Energy AB, 605 99 Norrköping (SE)
(72) Inventor: Inganäs, Olle, 582 46 LINKÖPING (SE); Liu, Lianlian, 58734 Linköping (SE); Solin, Niclas, 58223 Linköping (SE)
(74) Representative: AWA Sweden AB

(57) **Abstract**

The invention relates to a method for manufacturing a conductive material, the method comprising the steps of providing a carbon material; providing a lignin material comprising lignosulfonate; mechanically mixing the conducting carbon material and the lignin material, thereby forming a mixture; and separating a conductive material from the mixture. The invention further relates to a conductive material obtainable from the above process, and a use of such a material in electrochemical conversion.

## Description

### Technical field

The present invention relates to a method for manufacturing a conducting material, in particular to a method comprising mechanical mixing, a conductive material produced by a method comprising mechanical mixing and a use of such conductive material in electrochemical conversion.

### Background

Sustainable and clean energy from renewable sources has attracted more and more attention as fossil fuels are combusted and contribute to global warming. Lignin is a promising candidate for energy storage due to from its abundance, low cost and wide distribution. Lignin contains large amounts of catechol groups that can store electric energy by exchange of protons/metal ions and electrons. However, the insulating nature and amorphous morphology of lignin lead to low electric conductivity of such electrodes. In order to access redox functionality in lignin, previous solutions have included accessing the redox in lignin by combining lignosulfonate with conductive polymers such as PEDOT. The main motivator for using lignin as energy storage is cost and availability. Organic conductive materials are relatively expensive and hard to process in large scale. Thus, there is a need in the art today for improved processes for accessing the redox functionality in lignin.

### Summary

An object of the invention is to access the redox functionality in lignin to form an improved conducting material. This object of the invention, and others which should become apparent for the skilled person in the art having studied the description below, are accomplished by a process for manufacturing a conducting material, the process comprises the steps of
- providing a carbon material;
- providing a lignin material comprising lignosulfonate;
- mechanically mixing the conducting carbon material and the lignin material, thereby forming a mixture; and
- separating a conductive material from the mixture.

The invention thus solves the problem of the low electric conductivity of lignin electrodes by providing mechanical mixing of a material comprising lignin and a carbon material. The mechanical mixing improves the conductivity of the carbon material. It is contemplated that this is due to cleaving and/or exfoliation of the carbon material into a material that resembles graphene, such as few layer graphene. During the step of mechanical mixing of the carbon material and the lignin material, it is contemplated that the lignin material acts as surfactant and lubricating agent in the mechanical mixing process, thereby aiding the exfoliation process of graphene resembling material from the carbon material. Furthermore, the inventors have found that the aromatic catechol moieties in lignin interact favourably with the carbon material, both during the mixing process and the subsequent separation process, as well as in the operation of a battery comprising the conductive material as an electrode material.
Without wishing to be bound by any specific scientific theory, it may be contemplated that the redox site of the lignin material corresponds to a catechol unit in lignin and these may be accessed if they are close to the conducting phase i.e. electrons needs to be transferred from the carbon material to the redox site in lignin. The mechanical mixing step exfoliates graphene from the carbon material and reduces the transfer distance of the electrons between the redox site in lignosulfonate and carbon material, thus improving the electron transfer kinetics within the materials. It is contemplated that the lignin material, such as lignosulfonate, acts as surfactant to aid in the exfoliation of the carbon material, such as the exfoliation of graphite into few layer graphene (approximately 5 layers). The shear and impact forces subjected to the mixture during the solvent-free mechanical mixing process collapses the conductive material into flakes with a typical size distribution from 0.25 nm to 1143 nm. Thus, lignin can be combined with a carbon material such as graphite, activated carbon, and/or carbon black to fabricate energy storage devices with high conductivity and stability.

An advantage of the step of mechanical mixing according to the first aspect is that it can be performed without using any solvents. The step of mechanical mixing forms a solid mixture of the lignin material and carbon material. The solid mixture is then combined with a liquid, preferably water, to dissolve at least part of the solid mixture such that highly soluble compounds and compounds having a low molecular weight may be separated from the conductive material.

The step of separating may comprise dispersing the mixture in distilled water, followed by centrifuging, thereby forming pellets of the conducting material. The pellets may be formed of relatively larges carbon particles, such as flakes, and higher molecular weight lignosulfonate molecules. Herein, the term "pellets" is intended to denote the precipitate from the step of separating. The step of separating may further comprise a step of filtering.

Herein, the term "conductive material" refers to material capable of conducting electrons. The conductive material may be configured to be used as an electrode material.

Herein, the term "lignin material comprising lignosulfonate" refers to material derived from lignin comprising lignosulfonate. Lignosulfonate refers to sulfonated lignin and is, inter alia, a by-product from the production of wood pulp using sulphite pulping. Lignosulfonate may also be obtained by sulfonation of lignin obtained from alkaline pulping or synthetic lignin.

The lignin material comprising lignin may comprise, by weight, at least 90 % lignosulfonate, such as at least 95 % lignosulfonate, preferably at least 98 % lignosulfonate.

Herein, the term "carbon material" refers a material substantially consisting of carbon, such as graphite, carbon black, hard carbon, activated carbon, graphene, fullerene, amorphous carbon, carbon nanotubes and/or carbon fibres. Preferably, the carbon material comprises at least 90 % by weight of carbon, such as at least 95 %, preferably at least 98 %.

Herein, the term "mechanical mixing" refers to the mixing of two materials using mechanical means. Preferably, the mechanical mixing is capable of grinding at least part of the mixture by introduction of shear and/or impact forces into the materials. For example, the step of mechanical mixing may be a step of mechanical milling using for example a ribbon blender, plough mixer, or a twin screw blender. Preferably, the step of mechanical mixing comprises a step of ball milling. In ball milling, collisions between tiny rigid balls in a concealed container will generate localized high pressure that mills and grinds the material in the container, thus introducing shear and impact forces into the materials. The shear forces and impact forces introduced into the material during mechanical mixing should be high enough to be able to separate at least part of a graphene resembling material, such as few layer graphene from the carbon material.

The mechanical mixing may be performed for at least 15 minutes, such as at least 30 minutes, preferably at least 45 minutes. The mechanical mixing may be performed in a closed container. The mechanical mixing should preferably for a duration which allows high shear and impact forces to be introduced into a majority of the carbon material to separate at least some few layer graphene from the graphite material.

In some embodiments, the carbon material is graphite. Graphite is advantageous in that it is cheap and readily available.

In some embodiments, the step of mechanical mixing comprises mechanical milling. Mechanical milling should be understood as a process that breaks solid materials into smaller pieces by grinding, crushing or cutting, by using forces higher than the internal bonding forces in the material. The mechanical milling may be performed in a mill which typically comprises a closed compartment in which the milling can take place. For example, the step of mechanical mixing may be a step of mechanical milling using for example a ribbon blender, plough mixer, or a twin screw blender.

In some embodiments, the step of mechanical mixing comprises a step of ball milling. In ball milling, collisions between tiny rigid balls in a concealed container will generate localized high pressure that mills and grinds the material in the container, thus introducing shear and impact forces into the materials. Furthermore, ball milling is highly scalable and even very large batches can be milled using this technique.

In some embodiments, the ball milling is performed using a ratio, by volume, of balls to the combined volume of the carbon material and the lignin material in the range of 0.8-1.2:1 or 1:0.8-1.2. Preferably, the ball milling is performed in a ball milling container comprising equal amounts, by volume, of balls and the material to be milled. Preferably, the total volume of balls and material is at least 50 % of the total volume of the container, such as approximately 60 % of the total volume of the container. Thus, the balls are allowed to gain high enough velocity to be able to efficiently mill the carbon and lignin material. However, no more than 85 %, such as no more than 75 % of the total volume of the chamber should preferably be used, in order to ensure that the components get properly mixed.

In some embodiments, the ball milling is performed for at least 15 minutes and up to 4 hours, such as for at least 30 minutes, preferably for at least 1 hour. As is readily understood by the skilled person, the milling time may depend on the total volume of the material to be milled. Using conventional ball mills, and the volume ratio discussed above, 15 minutes has proven to yield a sufficient degree of milling of the mixture.

In some embodiments, the ratio, by weight, of lignosulfonate to carbon material is in the range of 1-10:1, such as in the range of 3-10:1. When the materials are mixed using the above ranges, a sufficient conductivity is achieved from the carbon material. A large amount of lignosulfonate is advantageous in many applications.

In some embodiments, the ratio, by weight, of lignosulfonate to carbon material is in the range of 3-6:1, such as about 5:1. This ratio has been shown to be particularly advantageous when the carbon material is graphite.

In some embodiments, the step of separating comprises dispersing the mixture in an aqueous solution. After the mixing step, an aqueous solution such as water may be added to the mixture. Thereafter, pellets of the conductive material may be separated from supernatant by means known to a skilled person in the art, such as sedimentation.

In some embodiments, the step of separating further comprises centrifuging the dispersed mixture in the aqueous solution, thereby forming pellets of the conductive material. A particularly advantageous way of separating the conductive material from the supernatant is to subject the liquid comprising mixture to centrifugation. Centrifugation is a quick and efficient way of separating solid matter from supernatant. After centrifugation the formed pellets of conducting material is collected. The collected material can thereafter be formed into e.g. electrodes for energy-conversion applications. It is contemplated that the centrifugation makes larger graphite flakes (e.g. few layer graphene) and higher molecular weight, less soluble lignosulfonate molecules precipitate and form pellets, which improves the connection between graphite flakes and the lignosulfonate molecules. The close connection between the graphite flakes and the lignosulfonate molecules gives the pellets a high conductivity and a density similar to graphite.

In some embodiments, the conducting material has a conductivity of at least 200 S/m, such as at least 270 S/m, preferably at least 500 S/m, more preferably at least 600 S/m, more preferably at least 700 S/m, more preferably 800 S/m. Thus, the formed material is suitable as an electrode material in energy conversion applications.

In some embodiments the conducting material has a charge capacity of at least 15 mAh/g, such as at least 20 mAh/g, preferably at least 30 mAh/g, more preferably at least 40 mAh/g.

In some embodiments the ratio, by weight, of lignosulfonate to carbon material in the conductive material is in the range of 1-2:3. The ratio between lignosulfonate and carbon material in the conductive material may be determined by residual traces data from thermogravimetric analysis.

In a second aspect of the present invention, there is provided a conductive material obtainable by the above-described process. The conductive material is suitable for use in several applications involving electrochemical conversion of energy, such as in battery applications. The conductive material may preferably have a conductivity of at least 200 S/m, such as at least 270 S/m, preferably at least 500 S/m, more preferably at least 600 S/m, more preferably at least 700 S/m, more preferably 800 S/m. Thus, the formed material is suitable as an electrode material in energy conversion applications. The conducting material may have a charge capacity of at least 15 mAh/g, such as at least 20 mAh/g, preferably at least 30 mAh/g, more preferably at least 40 mAh/g.

In a third aspect of the present invention, there is provided a use of the above described conductive material for electrochemical conversion, preferably as an electrode material in battery applications. The conductive material may be deposited on a metal conductor in order to form an electrode material. Other applications include supercapacitors and fuel cells.

### Brief description of the drawings

The invention will now be described with reference to the appended drawings.
Fig. 1 shows an IR transmittance spectra of lignosulfonate/graphite (5/1, w/w) pellets and supernatant.
Fig. 2 shows the absorbance of lignosulfonate solution in water.
Figs. 3a-d show SEM images of graphite (a), lignosulfonate (b) and lignosulfonate/graphite (5/1, w/w) pellets (c, d).
Fig. 4 shows a TEM image of lignosulfonate /graphite (5/1, w/w) pellets.
Fig. 5 shows DLS of the pellets dispersion and supernatant of lignosulfonate/graphite (5/1, w/w).
Figs. 6a-c show a) CV at the potential range of -0.2 V and 0.85 V in 0.1 M HClO₄ at 0.05 V/s, b) CVs at different scan rate at the potential range of -0.2 V and 1.0 V in 0.1 M HClO₄ and c) Dependence of the redox peak currents on scan rate of the LS/Graphite (5/1, w/w) pellets electrodes.

### Examples

### Materials and methods

Lignosulfonate (LS) and graphite were mixed by ball milling with a primary stoichiometry LS/graphite of 10/1; 7:1/ 5:1, 4:1, 2:1, and 1:1, which is named as LS/graphite (10/1, w/w), etc. The LS/graphite mixture was then dispersed into water and separated by centrifugation, after which pellets were collected to form a paste and then the paste was painted on gold electrodes to fabricate an organic electrode. UV-vis spectroscopy, FTIR spectroscopy, TGA, DLS, SEM, TEM, CVs and galvanostatic charge-discharge were applied to characterize the materials and electrodes.

The properties of the manufactured pellets are shown in Table 1 below.

**Table 1. Physical properties of LS/graphite mixture with different primary stoichiometry (w/w)**

| | Thickness / µm | Conductivity / (S m⁻¹) | Charge Capacity / (mAhg⁻¹) | Charge Capacity / (mAhcm⁻³) | Pellet Density / (gcm⁻³) |
|---|---|---|---|---|---|
| LS/graphite (10/1) | 2.3 | 860 | 20 | 12 | 1.70 |
| LS/graphite (7/1) | 2.5 | 630 | 14 | 7 | 1.95 |
| LS/graphite (5/1) | 4.3 | 520 | 31 | 16 | 1.95 |
| LS/graphite (4/1) | 3.0 | 630 | 18 | 11 | 1.65 |
| LS/graphite (2/1) | 7.4 | 280 | 43 | 44 | 0.97 |
| LS/graphite (1/1) | 24.3 | 40 | 23 | 29 | 0.79 |

### Characterization

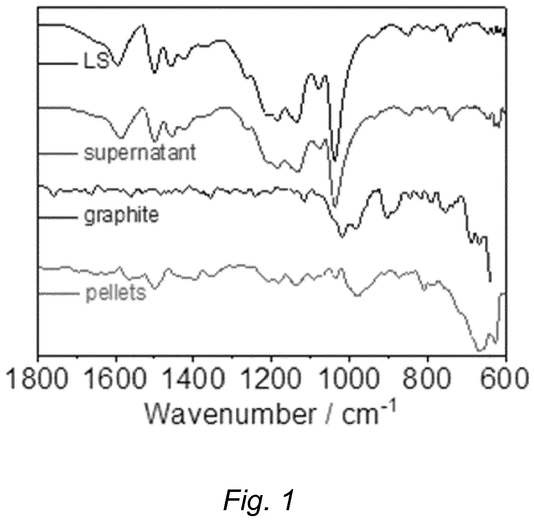

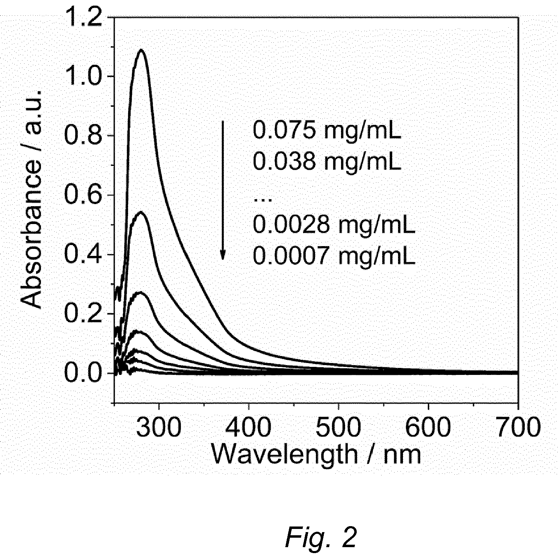

The chemical structures of LS, graphite, pellets and supernatant of LS/graphite (5/1, w/w) were characterized by IR transmittance spectra (Fig.1) and UV-vis absorption spectra (Fig.2). In IR transmittance spectra, LS solid showed transmittance peaks at 1596 cm-1 and 1500 cm-1 due to the vibration of the aromatic rings, 1458 cm-1 and 1424 cm-1 related to the vibration from aromatic ring connected with methyl and methylene, 1213 cm-1 related to C-O, C-C stretching vibrations and 1038 cm-1 attributed to C-O-C stretching vibration, which corresponded to the previous reported data for LS hybrid materials [F. N. Ajjan and O. Inganäs, J. Mater. Chem. A, 2016, 4, 1838-1847.]. The supernatant solid presented almost the same IR spectra as LS, except for the aromatic ring's vibration at 1585 cm-1 which is 1596 cm-1 in LS. There are no obvious peaks in the spectra of graphite, attributed to the lack of groups in graphite structures. The pellets show no significant peaks in the spectra either, which is a bit different from that of graphite. The IR results suggest some molecular interactions between LS and graphite in the supernatant and pellets. It also indicates that there is more LS than graphite in the supernatant materials and less LS in the pellets. In the UV-vis absorption spectra of LS solution in water and LS/graphite (5/1, w/w) supernatant dispersion (Fig 2), LS solution shows peaks at 280 nm, attributed to p-substituents in phenolic groups in LS [Z. Li and Y. Ge, J. Braz. Chem. Soc., 2011, 22, 1866-1871.]. LS/graphite (5/1, w/w) supernatant shows similar spectra with that of LS solution, indicating more LS than graphite in the supernatant, which corresponds to the IR results. In summary, the IR transmittance spectra and UV-vis absorption spectra can be understood from the fabrication process. Since LS is hydrophilic and graphite flakes are hydrophobic, more LS moved into the supernatant while more graphite moved into the pellets during the dispersing and centrifuging processing.

### Thermogravimetric analysis, TGA

Using residual traces data from TGA analysis, the ratio between lignosulfonate and graphite was determined as 2/3 in the pellets and 11/1 in the supernatant for LS/graphite (5/1, w/w).

### SEM and TEM

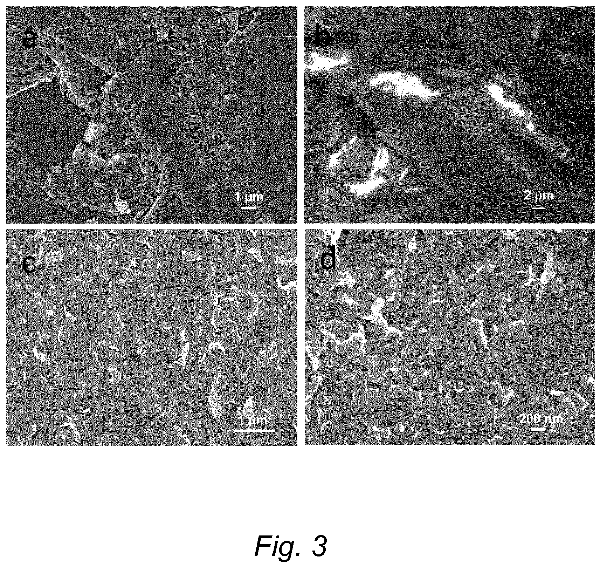

The morphology of graphite, LS and LS/ graphite (5/1, w/w) pellets electrodes were investigated by SEM (Fig. 3a-d). The SEM images of pellets electrodes (Fig. 3c, 3d) represent a granular-flake morphology, with a wide flakes size range from 80 nm to 1000 nm. On the other hand, graphite and LS show particle size of larger than µm (Fig. 3a, 3b). Thus the ball milling caused significant reduction of the grain size of graphite and particle size of LS by impact force and caused nanoscale geometries in electrode materials.

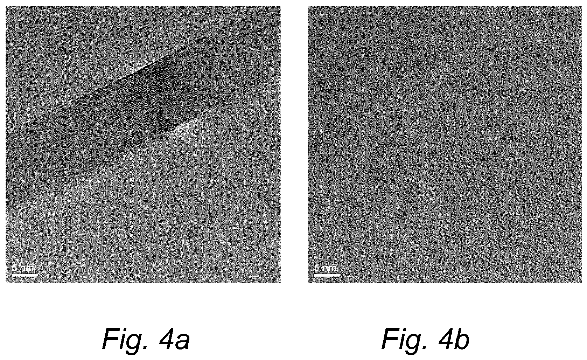

TEM images of LS/graphite (5/1, w/w) pellets show thickness of graphite to be 13 nm in 30 layers and 2.5 nm in 5 layers (Fig. 4), which correspond to the thickness of single layer graphene (0.34 nm) [K. Zhang and S. Wang, Scientific Reports, 2013, 3, 3448.]. Compared with the pristine graphite, the graphite in the pellets was exfoliated into multilayers, which is ascribed to the shear force exfoliation during ball milling. Based on the above results, we note that LS acted as a surfactant and reduced the surface tension of graphite, which lead to the exfoliation and thinning of graphite during the ball milling. Nanoscale geometries were obtained and the interaction surface area between LS and graphite was enhanced.

### Dynamic Light Scattering, DLS

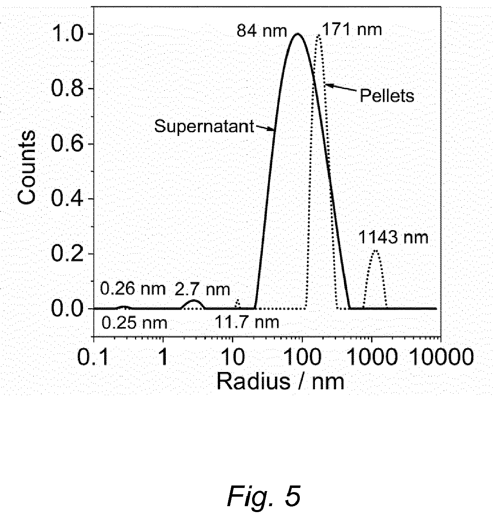

In order to have more knowledge about the particle size of pellets and supernatant materials, DLS was carried out for the measurements of pellets dispersion and supernatant. The DLS curves indicate particle size of 0.25 nm, 11.7 nm, 171 nm, 1143 nm for the pellets, which corresponded to the hierarchical particle size range in SEM and TEM images, and 0.26 nm, 2.7 nm, 84 nm for the supernatant materials (Fig.5). The particle size in the pellets is much bigger than that in the supernatant, which can be understood from the aqueous separation processing. The graphite flakes with bigger size could not stay stable in the aqueous medium and precipitated into the pellets during centrifuging. The DLS results suggest the approximate particle size range of graphite in the separated products of LS/graphite (5/1, w/w) mixture after ball milling processing, which corresponds to the SEM and TEM results.

### Electrochemical Measurements

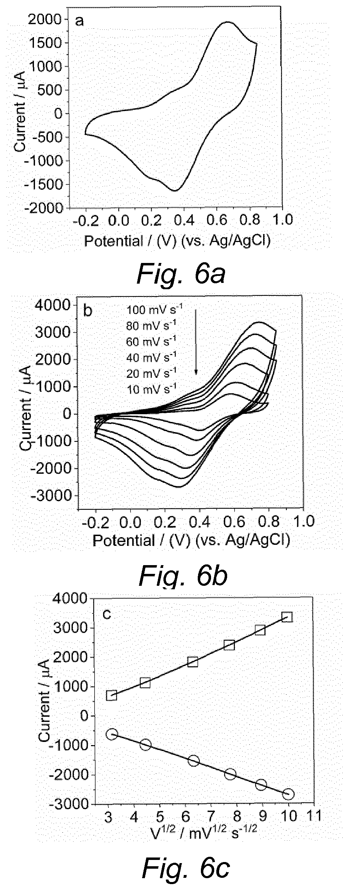

A standard three electrode system was applied for electrochemical characterization with a platinum wire as counter electrode (CE), Ag/AgCI (KCI salt) as reference electrode (RE) and LS/graphite (5/1, w/w) pellets on gold as working electrode (WE). CVs of the pellets electrodes in 0.1 M HClO₄ show two symmetric redox waves (Fig. 6a), well defined at -0.2 V and 0.7V versus Ag/AgCI, which is ascribed to the redox reactions of quinone groups in LS. The quinone groups are reduced from Q form to QH2 form at 0-0.4 V region, and oxidized from QH2 form to Q form at 0.5-0.85 V region. This indicates molecular interaction between the redox active quinones within LS and graphite.

The conductivity of the pellets is 520 S m⁻¹, which is approximately 300 times lower than that of pressed graphite (15 500 S m⁻¹), which is ascribed to the amorphous morphology of the pellets and the insulating properties of LS. However, this is much higher compared to the conductivity of reported materials comprising lignin and carbon. Moreover, the pellets electrodes show a thickness of 4.0 µm and a density of 1.95 g cm-3, which is similar with the density of pristine graphite (1.9 g cm-3).

Fig. 6b shows CVs at different scan rate at the potential range of -0.2 V and 1.0 V in 0.1 M HClO₄ and Fig. 6c shows the dependence of the redox peak currents on scan rate of the LS/Graphite (5/1, w/w) pellets electrodes.

### Varying primary stoichiometry

LS/graphite mixture with different primary stoichiometry were studied. They showed exceedingly different properties in thickness, conductivity, charge capacity and density. The thickness of the pellets electrodes varied from 2.3 µm to 24.3 µm and the conductivity varied from 860 to 40 S m-1, as the primary stoichiometry of LS and graphite decreased from 10/1 to 1/1. Approximately: the smaller the primary stoichiometry of LS and graphite, the larger thickness, lower conductivity and lower density of the pellets. As for the charge capacity, it represented a hierarchal wide range from 18 to 43 mAhg-1.. Thus the primary stoichiometry of LS and graphite affects the electrochemical properties of the pellets electrodes. See table 1.

## Claims

1. A method for manufacturing a conductive material, the method comprising the steps of:
- providing a carbon material;
- providing a lignin material comprising lignosulfonate;
- mechanically mixing the conducting carbon material and the lignin material, thereby forming a mixture; and
- separating a conductive material from the mixture.

2. The method according to claim 1, wherein the mechanical mixing comprises mechanical milling.

3. The method according to claim 2, wherein the mechanical milling is ball milling.

4. The method according to any one of claim 1-3, wherein the carbon material is graphite

5. The method according to claim 4, wherein the ball milling is performed using a ratio, by volume, of balls to carbon material and the lignin material is in the range of 0.8-1.2:1 or 1:0.8-1.2.

6. The method according to claim 4 or 5, wherein the ball milling is performed for at least 15 minutes.

7. The method according to any one of the preceding claims, wherein the ratio, by weight, of lignosulfonate to carbon material is in the range of 1-10:1, such as in the range of 3-10:1.

8. The method according to claim 7, wherein the ratio, by weight, of lignosulfonate to carbon material is in the range of 3-6:1.

9. The method according to any one of the preceding claim, wherein the step of separating comprises dispersing the mixture in an aqueous solution.

10. The method according to claim 9, wherein the step of separating further comprises centrifuging the dispersed mixture in the aqueous solution, thereby forming pellets of the conductive material.

11. The method according to any one of the preceding claims, wherein conducting material has a conductivity of at least 200 S/m, such as at least 270 S/m, preferably at least 500 S/m, more preferably at least 600 S/m, more preferably at least 700 S/m, more preferably 800 S/m.

12. The method according to any one of the preceding claims, wherein conducting material has a charge capacity of at least 15 mAh/g, such as at least 20 mAh/g, preferably at least 30 mAh/g, more preferably at least 40 mAh/g.

13. The method according to any one of the preceding claims, wherein ratio, by weight, of lignosulfonate to carbon material in the conductive material is in the range of 1-2:3.

14. A conductive material obtainable by the process according to any one of the preceding claims.

15. Use of a conductive material according to claim 10 for electrochemical conversion, preferably as an electrode material in battery applications.
